# EUROPEAN PATENT APPLICATION

(11) **EP 4 738 561 A2**
(43) Date of publication of application: **06.05.2026**
(21) Application number: 26160465.6
(22) Date of filing: 20.12.2017
(51) Int. Cl.: H01M 50/186

(54) **POUCH-TYPE SECONDARY BATTERY AND FABRICATING METHOD THEREFOR**

(30) Priority: 20.12.2016 KR 20160174846
(62) Divisional of application: 17885243.0
(71) Applicant: SK On Co., Ltd., Seoul 03161 (KR)
(72) Inventor: KIM, Tae Il, Daejeon 34124 (KR); KIM, Dong Ju, Daejeon 34124 (KR); KIM, Sung Yeop, Daejeon 34124 (KR); KIM, Jin Go, Daejeon 34124 (KR); LEE, Seung Noh, Daejeon 34124 (KR)
(74) Representative: Stolmár & Partner Patentanwälte PartG mbB

(57) **Abstract**

A pouch type secondary battery is disclosed. One aspect of the present invention provides a pouch type secondary battery including a casing material configured to accommodate an electrode assembly from which electrode tabs are led; and the casing material includes a sealing portion formed on three sides of four sides of the pouch type secondary battery and an close contact portion formed on the remaining one side; and an extending portion protruding perpendicularly with respect to the close contact portion is formed in a portion adjacent to the close contact portion in the sealing portion.

## Description

### [Technical Field]

The present invention relates to a pouch type secondary battery and a method of fabricating the same.

### [Background Art]

As low-carbon green growth is emerging as a global issue around the world, the green energy industry is receiving great attention. Recently, development of electric vehicles or energy storage devices for storing renewable energy have been attracting great attention in dealing with the depletion of fossil fuels and reducing carbon dioxide.

Since an electric vehicle is driven by using electric energy as a main power source from a battery, without an engine, an electric vehicle does not generate exhaust gas. Further, since the vehicle is driven by using only electric energy from a battery, energy density of the battery should be high compared to a volume occupied by the battery and a weight of the battery. Accordingly, it has been necessary to develop a technique for generating high energy density in secondary batteries of an electric vehicle. Lately, there is a strong demand for extending the lifespan of such secondary batteries, and there is an increasing need for a technique for maintaining performance of secondary batteries even when the secondary batteries are exposed to high temperatures for a long time.

A typical pouch type secondary battery may be formed by wrapping an electrode assembly with a casing material. Here, a sealing portion is formed by sealing an outermost portion of the casing material in which an electrode assembly is accommodated. However, when a secondary battery module is assembled in a state in which the sealing portion protrudes, a total volume of the secondary battery module is increased due to the sealing portion, such that energy density of the secondary battery module may be lowered.

### [Prior-art Documents]

### [Patent Documents]

Korean Patent Publication No. 10-1520153 (May 07, 2015)

### [Disclosure]

### [Technical Problem]

Embodiments of the present invention provide a pouch type secondary battery module capable of improving density of a secondary battery module by forming a sealing portion of the pouch type secondary battery module to be smaller and a method of fabricating the same.

Embodiments of the present invention provide a pouch type secondary battery module which reduces an increase in volume of a sealing portion formed by attaching a casing material to a secondary battery module and a method of fabricating the same.

Embodiments of the present invention provide a pouch type secondary battery module which improves cooling efficiency and a method of fabricating the same.

### [Technical Solution]

One aspect of the present invention provides a pouch type secondary battery including a casing material configured to accommodate an electrode assembly from which electrode tabs are led; and the casing material includes a sealing portion formed on three of four sides of the pouch type secondary battery and includes an close contact portion formed on the one remaining side; and an extending portion protruding perpendicularly with respect to the close contact portion is formed in the sealing portion in a portion adjacent to the close contact portion.

A concave portion may be formed in a longitudinal direction of the close contact portion.

A plurality of accommodation spaces configured to accommodate the electrode assembly and a rounded portion having an upwardly convex shape located at a gap between the plurality of accommodation spaces may be formed in the casing material before the electrode assembly is accommodated in the casing material, and the concave portion may be at least a part of the rounded portion.

The casing material may include aluminum or an aluminum alloy.

Another aspect of the present invention provides a method of fabricating a pouch type secondary battery, the method including: providing an electrode assembly at which electrode tabs are connected; forming a casing material on which a rounded portion of an upwardly convex shape is formed at a gap between a plurality of accommodation spaces configured to accommodate an electrode assembly; accommodating the electrode assembly in one of the plurality of accommodation spaces of the casing material so that the electrode tab is led to an outside; forming an close contact portion, which is brought into close contact with at least one side surface of side surfaces of the electrode assembly, on the casing material in a state in which the electrode assembly is accommodated in the accommodation space; forming a sealing portion by bonding the casing material at portions other than the close contact portion; and forming an extending portion protruding perpendicularly with respect to the close contact portion by a predetermined length in the sealing portion at a portion adjacent to the close contact portion.

A press in which a plurality of accommodation spaces and a rounded part of an upwardly convex shape formed at a gap between the accommodation spaces are formed may be used to form a shape of the casing material, and the casing material may be provided in a sheet form and may be pressed to the side in which the press is located.

The rounded portion may be spread along at least one side surface of the side surfaces of the electrode assembly when the one remaining accommodation space of the plurality of accommodation spaces covers the electrode assembly.

The rounded portion is spread and an close contact portion which is brought into close contact with the electrode assembly may be formed.

The casing material may include aluminum or an aluminum alloy.

### [Advantageous Effects]

Embodiments of the present invention provide a pouch type secondary battery module capable of improving density of a secondary battery module by forming a sealing portion of the pouch type secondary battery module to be reduced and a fabricating method.

Embodiments of the present invention provide a pouch type secondary battery module which reduces an increase in volume of a sealing portion which is formed by closely attaching a casing material to a secondary battery module and a fabricating method.

Embodiments of the present invention provide a pouch type secondary battery module in which a cooling plate configured to cool a secondary battery module can be arranged not only in an arrangement direction side in which the secondary battery module is arranged but also in a direction perpendicular to the arrangement direction, thereby improving cooling efficiency, and a fabricating method.

### [Description of Drawings]

FIG. 1 is a perspective view of a pouch type secondary battery module according to an embodiment of the present invention.
FIG. 2 is a plan view of the pouch type secondary battery module according to an embodiment of the present invention.
FIG. 3 is a view showing a casing material and a press according to an embodiment of the present invention.
FIG. 4A is a view showing a state in which an electrode assembly is arranged in an accommodation space of a casing material according to an embodiment of the present invention.
FIG. 4B is a view showing a state in which the casing material according to an embodiment of the present invention is bonded along an outer periphery of the electrode assembly.

### [Modes of the Invention]

Hereinafter, specific embodiments of the present invention will be described with reference to the drawings. However, this is an exemplary embodiment only and the present invention is not limited thereto.

In descriptions of the invention, when it is determined that detailed descriptions of related well-known functions unnecessarily obscure the gist of the invention, detailed descriptions thereof will be omitted. Some terms described below are defined by considering functions in the invention and meanings may vary depending on, for example, a user or operator's intentions or customs. Therefore, the meanings of terms should be interpreted based on the scope throughout this specification.

The spirit of the invention is defined by the appended claims. The following embodiments are only made to efficiently describe the progressive technological scope of the invention to those skilled in the art.

A secondary battery used in various electric devices such as an electric vehicle may be, for example, a pouch type battery of a lithium ion battery or of a lithium polymer battery, and hereinafter, they will all be referred to as secondary batteries.

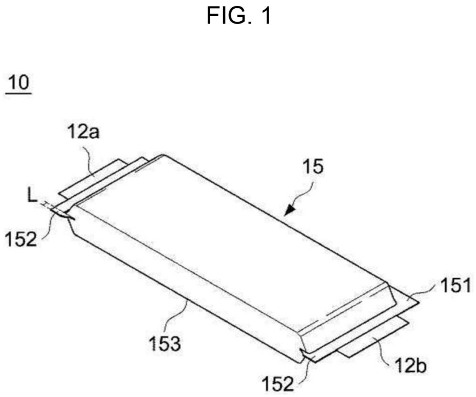

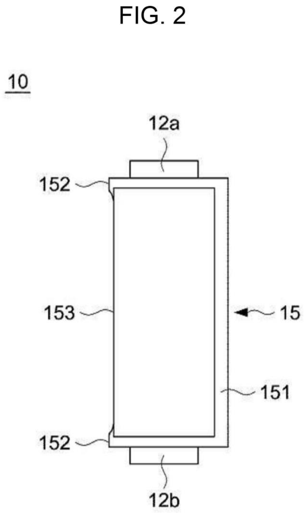

FIG. 1 is a perspective view of a pouch type secondary battery 10 according to an embodiment of the present invention. FIG. 2 is a plan view of the pouch type secondary battery 10 according to an embodiment of the present invention.

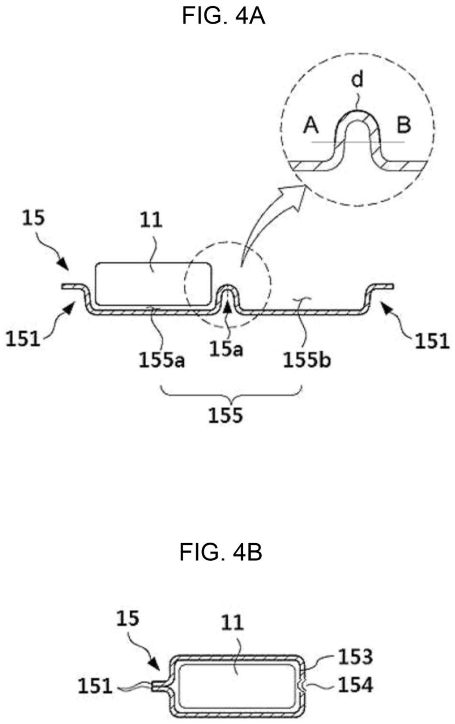

Referring to FIGS. 1 and 2, the pouch type secondary battery 10 may include a casing material 15 configured to accommodate an electrode assembly (11 in FIG. 4) from which electrode tabs 12a and 12b are led, and the casing material 15 may include a close contact portion 153 which is brought into close contact with the electrode assembly 11 at at least one side surface of side surfaces of the electrode assembly 11 and a sealing portion 151 which is formed by bonding the casing material 15 at portions other than the close contact portion 153. The sealing portion 151 may include extending portions 152 protruding perpendicularly with respect to the close contact portion 153 by a predetermined length L at a portion adjacent to the close contact portion 153 in the sealing portion 151.

The secondary battery 10 may include the electrode assembly 11, and a positive electrode tab 12a and a negative electrode tab 12b which protrude from the electrode assembly 11 to the outside of the casing material 15. The electrode assembly 11 may be of a jelly-roll form wounded in a spiral form with a roll-shaped separator interposed between a positive electrode plate and a negative electrode plate. However, the electrode assembly 11 is not limited thereto, and may have a stacked shape in which a positive electrode plate, a separator, and a negative electrode plate are sequentially stacked. The positive electrode tab 12a and the negative electrode tab 12b may be electrically connected to a positive electrode plate and a negative electrode plate, respectively, and may protrude from both ends of the electrode assembly 11. However, the present invention is not limited thereto, and the positive electrode tab 12a and the negative electrode tab 12b may protrude from one end of the electrode assembly 11 and be spaced apart from each other. In an embodiment of the present invention, a case in which electrode tabs 12 protrude from both ends of the electrode assembly 11 will be described.

The casing material 15 may accommodate the electrode assembly 11 from which the electrode tabs 12a and 12b are led. The casing material 15 may include aluminum. The use of aluminum for the casing material 15 may be for miniaturization, weight reduction, thinning, and resistance to severe thermal environments and mechanical impacts. A plurality of accommodation spaces 155a (see FIG. 4A) may be formed in the casing material 15 in a recessed shape, and the electrode assembly 11 may be disposed in the accommodation space 155a. The casing material 15 may be bonded along an outer periphery of the electrode assembly 11 after the electrode assembly 11 is disposed.

The sealing portion 151 may be formed by bonding the casing material 15 along the outer periphery of the electrode assembly 11. The sealing portion 151 is formed by bonding the casing material 15 and may be formed along four sides around the side surface of the casing material 15. Here, the electrode tabs 12a and 12b may be led to the outside of the sealing portion 151 at both ends of the electrode assembly 11. For example, the electrode tabs 12a and 12b may be led from both ends of the electrode assembly 11 in a longitudinal direction (i.e., the vertical direction in FIG. 2) of the electrode assembly 11. However, the present invention is not limited thereto, and when the electrode tabs 12a and 12b are led from one end of the electrode assembly 11 and are spaced apart from each other, the electrode tabs 12a and 12b may be led from one end of the electrode assembly 11 to the outside of the sealing portion 151.

Here, a volume of the secondary battery module may be increased by as much as a length by which the sealing portion 151 is formed. Accordingly, in the pouch type secondary battery 10 according to an embodiment of the present invention, the casing material 15 is not formed along four sides forming the side surface of the electrode assembly 11 but is formed to be in close contact with the electrode assembly 11 on at least one of four sides forming the side surface of the electrode assembly 11, thereby reducing the volume of the secondary battery module.

The casing material 15 may be brought into close contact with at least one side surface of the side surfaces of the electrode assembly 11. Here, a portion of the casing material 15 which is brought into close contact with the electrode assembly 11 will be described as the close contact portion 153. The close contact portion 153 may be formed in close contact with the electrode assembly 11. Accordingly, an excess portion of the sealing portion 151 is reduced when a secondary battery module is assembled, such that a space that may be formed between adjacent secondary batteries may be reduced. That is, adjacent secondary batteries may be in close contact with each other without creating a space therebetween because the casing material 15 is formed to be in close contact with one surface of the side surfaces of the electrode assembly 11, and the one surface is the surface in which the electrode tabs 12a and 12b are not formed. Accordingly, when assembling the secondary battery 10, the volumetric efficiency thereof may be increased.

The sealing portion 151 according to an embodiment of the present invention may include at least one extending portion 152 protruding by a predetermined length at a position adjacent to the electrode tabs 12a and 12b.

Here, the extending portion 152 may protrude perpendicularly with respect to the close contact portion 153 by a predetermined length L at a portion adjacent to the close contact portion 153. Here, the extending portion 152 may have a length of less than a few millimeters (mm). Two extending portions 152 may protrude in the same direction, or may protrude in a perpendicular direction with respect to a direction in which the electrode tab 12 protrudes. Further, a position at which the extending portion 152 protrudes may be at least one side of the electrode assembly 11 in which the electrode tabs 12a and 12b are not formed.

Furthermore, cooling efficiency of the secondary battery 10 may be improved by forming the close contact portion 153 on one surface of the secondary battery 10. That is, the close contact portion 153 may be in contact with a cooling plate (not shown) or the like capable of cooling the secondary battery 10. For example, the plurality of secondary batteries 10 may be stacked in parallel so that the close contact portion 153 of each of the plurality of secondary batteries 10 is positioned downward, and a cooling plate capable of cooling the secondary battery 10 may be disposed on lower sides of the plurality of the secondary batteries 10 to be in contact with the close contact portion 153 of each of the plurality of secondary batteries 10.

Further, since the cooling plate, which has a flat shape, is brought into close contact with the close contact portion 153 and the extending portions 152 located at both ends of the close contact portion 153 extend in a vertical direction from the close contact portion 153, the extending portions 152 can serve to maintain arrangement of the secondary battery 10 with respect to the cooling plate. For example, grooves capable of accommodating the extending portions 152 are formed in the cooling plate at predetermined intervals (intervals in which the secondary battery 10 are arranged), and the extending portions 152 are accommodated in the grooves, and thus the plurality of secondary batteries 10 may be maintained on the cooling plate.

Further, a concave portion (154 in FIG. 4) may be formed in a longitudinal direction at an intermediate position of the close contact portion 153. The electrode assembly 11 and the casing material 15 are in close contact with each other at the concave portion 154 more than at other portions of the close contact portion 153, and thus, heat transfer between the electrode assembly 11 and the casing material 15 may be more efficient. Accordingly, formation of the concave portion 154 may be more effective for cooling the pouch type secondary battery 10.

Further, a method of fabricating the pouch type secondary battery 10 according to an embodiment of the present invention will be described.

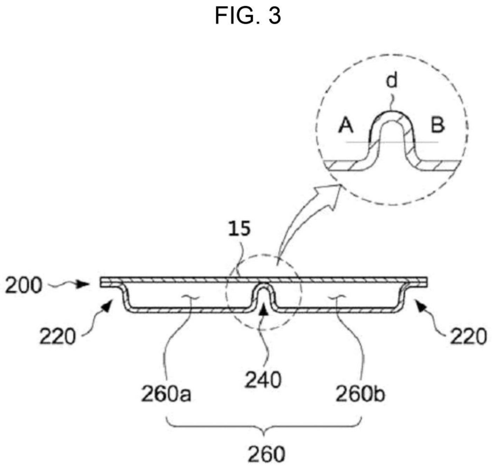

FIG. 3 is a view showing a casing material 15 and a press frame 200 according to an embodiment of the present invention.

As shown in FIG. 3, the casing material 15 may be pressed by the press frame 200 to form a shape thereof.

The press frame 200 may include a plurality of accommodation spaces 260 including a first accommodation space 260a and a second accommodation space 260b and a rounded part 240 formed at a gap between the first accommodation space 260a and the second accommodation space 260b. Further, the press frame 200 may include sealing parts 220 to form a sealing portion 151 of the casing material 15.

The accommodation space 260 is a space configured to accommodate an electrode assembly 11, and may have a recessed shape. Although the press frame 200 according to an embodiment of the present invention is formed with two accommodation spaces 260a and 260b in accordance with a shape of the casing material 15, the present invention is not limited thereto. That is, in various embodiments of the present invention, the accommodation space may be formed in an appropriate number corresponding to the shape of the casing material 15.

The rounded part 240 may be formed at an interval between the respective accommodation spaces 260a and 260b. The rounded part 240 may be formed to protrude convexly in a direction opposite to a recessed direction of the accommodation space 260. The rounded part 240 may have a convex curved shape. For example, a cross section of the rounded part 240 may be semicircular.

As described above, although the shape of the rounded part 240 is not limited, a circumference of the cross section of the rounded part 240 may be a semicircular circumference d from side A to B shown in FIG. 5 when the cross section of the rounded part 240 is semicircular. Here, side A means an adjacent side of a first accommodation space 260a, and side B means an adjacent side of a second accommodation space 260b. An uppermost portion of the rounded part 240 may be located at the same height as the sealing parts 220 or at a height at which it is adjacent to the sealing parts 220.

In addition, the rounded part 240 may prevent the casing material 15 from being broken during a process of pressing the casing material 15. This is because the rounded part 240 has an upwardly convex shape such that a concentration of stress received by the rounded part 240 may be minimized by the shape of the rounded part 240. Accordingly, it is possible to prevent the casing material 15 from being broken.

The casing material 15 may be provided in a form of a sheet including aluminum or an aluminum alloy and may be pressed to a side in which the press frame 200 is located. Accordingly, the casing material 15 may be pressed into a shape of the press frame 200.

FIG. 4A is a view showing a state in which the electrode assembly 11 is arranged in accommodation spaces 155 of the casing material 15 according to an embodiment of the present invention. FIG. 4B is a view showing a state in which the casing material 15 according to an embodiment of the present invention is bonded along an outer periphery of the electrode assembly 11.

Referring to FIGS. 4A and 4B, the electrode assembly 11 may be accommodated in the accommodation space 155 of the casing material 15 when the casing material 15 is pressed by the press frame 200,

In the following description, in the accommodation spaces 155 of the casing material 15, a space in which the electrode assembly 11 is disposed is defined as a first accommodation space 155a and a space in which the electrode assembly 11 is not disposed is referred to as a second accommodation space 155b.

A shape of the casing material 15 is formed and the electrode assembly 11 may be disposed in the first accommodation space 155a of the casing material 15.

When the electrode assembly 11 is disposed, a rounded portion 15a may be spread along at least one side surface of the side surfaces of the electrode assembly 11.

The rounded portion 15a may have an upwardly convex curved shape. For example, a cross section of the rounded portion 15a may be semicircular. Accordingly, the rounded portion 15a, which has a convex shape, may be spread along one side surface of the electrode assembly 11.

Here, a surface with which the rounded portion 15a is closely contacted may be a surface on which electrode tabs 12a and 12b are not formed. That is, an close contact portion 153 that is brought into close contact with the electrode assembly 11 may be formed as the rounded portion 15a is spread.

As described above, a concave portion 154 corresponding to a center of the rounded portion 15a may be formed in the close contact portion 153 while the rounded portion 15a having the convex shape is brought into close contact with one side surface of the electrode assembly 11. Further, although the shape of the rounded portion 15a is not limited, a length of the circumference of the rounded portion 15a in a vertical cross section with respect to the rounded portion 15a may be a circumference d of a semicircle when the cross section of the rounded portion 15a is semicircular. That is, a circumference of the rounded portion 15a may be a semicircular circumference d from side A to B shown in FIG. 6A. Here, side A means an adjacent side of the first accommodation space 155a, and side B means an adjacent side of the second accommodation space 255b. Accordingly, the rounded portion 15a may be a portion formed by a curved surface from A to B. Portions other than a portion to be the close contact portion 153 may be a part of the extending portion 152 in the rounded portion 15a of the casing material 15. Since the shape of the rounded portion 15a corresponds to the curved surface, a portion (a portion adjacent to the close contact portion 153 in the extending portion 152 ) that is not in close contact with the electrode assembly 11 may slightly protrude when the casing material 15 is folded as shown in FIG. 6B.

The second accommodation space 155b may cover the upper side of the electrode assembly 11 when the rounded portion 15a is brought into close contact with the electrode assembly 11.

Accordingly, the electrode assembly 11 is accommodated and sealed in the casing material 20 so that the pouch type secondary battery 10 may be formed.

While the present invention has been described above in detail with reference to representative embodiments, it may be understood by those skilled in the art that the embodiment may be variously modified without departing from the scope of the present invention. Therefore, the scope of the present invention is defined not by the described embodiment but by the appended claims, and encompasses equivalents that fall within the scope of the appended claims.

### [Description of Reference Numerals]

10: POUCH TYPE SECONDARY BATTERY
11: ELECTRODE ASSEMBLY
12: ELECTRODE TAB
15: CASING MATERIAL
15A: ROUNDED PORTION
151: SEALING PORTION
152: EXTENDING PORTION
153: CLOSE CONTACT PORTION
154: CONCAVE PORTION
155: ACCOMMODATION SPACE

## Claims

1. A pouch type secondary battery comprising:
a casing material configured to accommodate an electrode assembly,
wherein the casing material includes a sealing portion formed on three of four sides of the pouch type secondary battery, and a close contact portion formed on one remaining side of the pouch type secondary battery,
wherein a concave portion is formed in a longitudinal direction of the close contact portion,
wherein the casing material, before accommodating the electrode assembly, is provided with a rounded portion having a convex shape,
wherein the rounded portion is brought into contact with at least one side surface of the electrode assembly and is spread along the at least one side surface of the electrode assembly,
wherein the concave portion is formed as at least a part of the rounded portion.

2. The pouch type secondary battery according to claim 1,
wherein the casing material includes a plurality of accommodation spaces configured to accommodate the electrode assembly,
and wherein the rounded portion is disposed between the plurality of accommodation spaces.

3. The pouch type secondary battery according to claim 2,
wherein the plurality of accommodation spaces comprises two accommodation spaces.

4. The pouch type secondary battery according to claim 1,
wherein the sealing portion comprises extending portions protruding with respect to the close contact portion.

5. The pouch type secondary battery according to claim 4,
wherein the concave portion is positioned between the extending portions.

6. The pouch type secondary battery according to claim 4,
wherein the extending portions are disposed at opposite ends of the close contact portion and are spaced apart from each other.

7. The pouch type secondary battery according to claim 4,
wherein the extending portions protrude in a direction perpendicular to the close contact portion.

8. The pouch type secondary battery according to claim 1,
wherein the casing material includes aluminum or an aluminum alloy.

9. The pouch type secondary battery according to claim 1,
wherein the casing material includes a plurality of accommodation spaces configured to accommodate the electrode assembly and a connection portion located between the plurality of accommodation spaces,
and wherein the concave portion is formed as at least a part of the connection portion.

10. A method of fabricating a pouch type secondary battery, the method comprising:
forming a casing material having a rounded portion of a convex shape located between a plurality of accommodation spaces configured to accommodate an electrode assembly;
accommodating the electrode assembly in one of the plurality of accommodation spaces;
spreading the rounded portion along at least one side surface of the electrode assembly so as to form a close contact portion on one side of the pouch type secondary battery; and
forming a sealing portion by bonding the casing material at portions other than the close contact portion; and
forming, in the close contact portion, a concave portion extending in a longitudinal direction of the close contact portion;
wherein the concave portion is formed as at least a part of the rounded portion.

11. The method according to claim 10,
wherein extending portions are formed in the sealing portion and protrude with respect to the close contact portion.

12. The method according to claim 10,
wherein a press in which a plurality of accommodation spaces and a rounded part of an upwardly convex shape formed at a gap between the accommodation spaces are formed is used to form a shape of the casing material, and the casing material is provided in a sheet form and pressed to the side in which the press is located.

13. The method according to claim 10,
wherein the casing material includes aluminum or an aluminum alloy.
